(19) Europäisches Patentamt
European Patent Office
Office européen des brevets

(11) Numéro de publication: **0 027 401**
**B1**

(12) **FASCICULE DE BREVET EUROPEEN**

(45) Date de publication du fascicule du brevet: **15.09.82**

(51) Int. Cl.³: **C 08 J 9/00**, C 08 L 75/08, C 08 K 5/54 //C07F7/18

(21) Numéro de dépôt: **80401376.1**

(22) Date de dépôt: **29.09.80**

(54) **Procédé de fabrication de mousses souples de polyuréthanne à l'aide de polypentaérythritols triorganosilyles.**

(30) Priorité: **11.10.79 FR 7925309**

(43) Date de publication de la demande:
**22.04.81 Bulletin 81/16**

(45) Mention de la délivrance du brevet:
**15.09.82 Bulletin 82/37**

(84) Etats contractants désignés:
**DE NL SE**

(56) Documents cités:
FR - A - 2 288 754

(73) Titulaire: **RHONE-POULENC SPECIALITES CHIMIQUES**
**"Les miroirs" 18, Boucle d'Alsace**
**F-92400 Courbevoie (FR)**

(72) Inventeur: **Duvernay, Maurice**
**59, Chemin de la Citadelle**
**F-69230 Saint-Genis-Laval (FR)**
Inventeur: **Farina, Francesco**
**102, rue Garibaldi**
**F-69006 Lyon (FR)**
Inventeur: **Guillaume, André**
**32, rue Boileau**
**F-69006 Lyon (FR)**

(74) Mandataire: **Fichet, Edouard et al,**
**RHONE POULENC RECHERCHES Service Brevets Chimie et Polymères 25, quai Paul Doumer**
**F-92408 Courbevoie Cedex (FR)**

**EP 0 027 401 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé de fabrication de mousses souples de polyuréthanne à l'aide de polypentaérythritols triorganosilyles

La présente invention a pour objet un procédé de préparation de mousses souples de polyuréthanne "dites à froid" par expansion dans des moules, de compositions moussantes renfermant de très faibles quantités de stabilisants organosiliciques choisis parmi les polypentaerythritols triorganosilylés. Ces mousses ont de bonnes caractéristiques physiques, en particulier une élasticité élevée.

Les mousses souples de polyuréthanne "dites à froid", c'est-à-dire ne nécessitant par un chauffage ultérieur, après leur démoulage, pour achever leur réticulation, sont fabriquées et utilisées déjà depuis plusieurs années. Pour les préparer il est indispensable de mettre en oeuvre — en dehors de polyisocyanates modifiés ou non, d'agents d'expansion, de catalyseurs et d'agents stabilisants — des polyétherpolyols renfermant au moins 10% en nombre de radicaux hydroxyles primaires.

A ces polyétherpolyols sont associés, en tant qu'agents stabilisants, des composés organosiliciques dont la structure est fort éloignée de celle des copolymères à blocs polysiloxanes-polyoxyalcoylènes utilisés pour la préparation de mousses exigeant une postcuisson.

Ainsi ces composés organosiliciques peuvent être des polyols triorganosilyles préparés par réaction de polyols de faible masse moléculaire, tels le triméthylolpropane, le pentaérythritol, avec des triorganohalogénosilanes tels le triméthylchlorosilane, le diméthylvinylchlorosilane (brevet français 2 288 754); ces polyols triorganosilylés sont utilisés à raison de 0,05% à 3% en poids par rapport aux polyétherpolyols.

D'autres composés organosiliciques de structure un peu différente sont également employés en quantités du même ordre (brevets américains 3 935 133, 4 016 163, 4 067 828 brevet français 2 291 995, demande européenne publiée 761).

Bien que ces quantités soient assez faibles les fabricants de mousses cherchent encore à les réduire du fait du prix relativement élevé des composés organosiliciques vis-à-vis de celui des autres constituants des mousses.

La présente invention a pour objet l'utilisation, en très faibles quantités, de nouveaux stabilisants organosiliciques, dans des compositions transformables en mousses de polyuréthanne.

Plus précisement la présente invention se rapporte à un procédé de fabrication de mousses souples de polyuréthanne "dites à froid" dans lequel on coule dans des moules, à l'air ambiant, des compositions moussantes obtenues par mélange principalement de polyétherpolyols ayant une masse moléculaire comprise entre 800 et 50 000, contenant au moins 2,1 radicaux hydroxyles par mole (dont au moins 35% sont des radicaux hydroxyles primaires), de polyisocyanates, d'eau, de catalyseurs, et de stabilisants à base de composés organosiliciques, puis attend la formation des mousses et les démoule, caractérisé en ce qu'on utilise comme stabilisants, à raison de 0,001 à 1% en poids par rapport aux polyétherpolyols, des polypentaérythritols triorganosilylés de formule générale:

$$(R_3SiOCH_2)_{4-a}C\{CH_2OCH_2C(CH_2OSiR_3)_3\}_a$$

dans laquelle les symboles R, identiques ou différents, représentent des radicaux méthyles, éthyles, vinyles, au moins un radical R par groupe $—SiR_3$ est un radical méthyle, le symbole a représente 1, 2, 3 ou 4.

Ces polypentaérythritols triorganosilylés sont connus; ils sont décrits, par exemple, dans l'article de Richard R. Suchanec publié dans Analytical Chemistry vol. 37, n° 11, Octobre 1965, pages 1361 à 1365, D'autre part ils sont aisément fabriqués par réaction de silanes et/ou de silazanes, respectivement de formules $R_3SiX$ et $R_3SiNH—SiR_3$, (le symbole X représente un atome d'halogène, de préférence le chlore, et les symboles R ont la signification précitée) avec des polypentaérythritols. Cette réaction est analogue à celle exposée dans le brevet français 2 288 754 qui conduit à des polyols triorganosilylés à partir des mêmes agents de silylation de formules $R_3SiX$ et $R_3SiNH—SiR_3$, et de polyols, proches des polypentaérythritols, comprenant le pentaérythritol, le triméthylol-1,1,1 éthane, le triméthylol-1,1,1 propane.

Les recommandations et variantes du mode opératoire du brevet français 2 288 754 sont donc appliquables à la préparation des polypentaérythritols triorganosilylés, en particulier:

— il est préférable, lorsque l'agent de silylation est le silane $R_3SiX$, de neutraliser l'acide halogèné formé HX par l'ammoniac ou une amine tertiaire telle la triéthylamine, la pyridine.

— l'emploi d'un mélange équimolaire des agents de silylation $R_3SiX$ et $R_3SiNHSiR_3$ évite la présence d'un agent basique puisque l'acide halogèné HX, est neutralisé par l'ammmoniac fourni par le disilazane $R_3SiNHSiR_3$. Le schéma ci-après de préparation du dipentaérythritol hexatriméthylsilylé illustre ce processus:

$$(HOCH_2)_3C—CH_2OCH_2C(CH_2OH)_3 + 2(CH_3)_3SiCl + 2(CH_3)_3SiNHSi(CH_3)_3$$

$$\rightarrow \{(CH_3)_3SiOCH_2\}_3CCH_2OCH_2C\{CH_2OSi(CH_3)_3\}_3 + 2NH_4Cl.$$

— le contrôle de la température de la réaction peut être assuré par la dilution du milieu réactionnel avec des solvants organiques tels que le toluène, le xylène, utilisés à raison de 10 à 50% du poids des réactifs.

Les polypentaérythritols de départ (c'est-à-dire le di, tri, tétra et pentapentaérythritol) sont des produits commerciaux renfermant souvent, à côté du produit désiré, un faible pourcentage des autres polyols.

A titre illustratif sont cités, ci-après, au moyen de leur formule, divers polypentaérythritols triorganosilylés:

$$\{(CH_3)_3SiOCH_2\}_3CCH_2OCH_2C\{CH_2OSi(CH_3)_3\}_3$$

$$\{(CH_3)_2(CH_2{=}CH)SiOCH_2\}_3CCH_2OCH_2C\{CH_2OSi(CH{=}CH_2)(CH_3)_2\}_3$$

$$\{(CH_3)_3SiOCH_2\}_2C[CH_2OCH_2C\{CH_2OSi(CH_3)_3\}_3]_2$$

$$\{(CH_3)_2(C_2H_5)SiOCH_2\}_2C[CH_2OCH_2C\{CH_2OSi(C_2H_5)(CH_3)_2\}_3]_2,$$

$$(CH_3)_3SiOCH_2C[CH_2OCH_2C\{CH_2OSi(CH_3)_3\}_3]_3$$

$$C[CH_2OCH_2C\{CH_2OSi(CH_3)_3\}_3]_4$$

Ces polypentaérythritols triorganosilylés sont introduits dans les compositions moussantes à raison de 0,001 à 1% en poids, de préférence 0,005 à 0,1%, par rapport au poids des polyétherpolyols.

Comme déjà indiqué les compositions moussantes sont préparées par mélange de polyétherpolyols, de polyisocyanates, d'eau et/ou d'autres agents d'expansion, de catalyseurs, de stabilisants et éventuellement d'adjuvants auxiliaires tels que des réticulants.

Les polyétherpolyols mis en oeuvre ont des masses moléculaires de l'ordre de 750 à 50 000, de préférence 1 500 à 20 000; ils renferment en moyenne de 2,1 à 5 radicaux hydroxyles par mole dont 35% à 90% sont des radicaux hydroxyles primaires. L'indice d'hydroxyle de ces polyéthers ne dépasse pas généralement 45.

Ils sont préparés par polymérisation d'epoxydes tels que les oxydes d'éthylène, de propylène, de butylène, le tétrahydrofuranne, l'oxyde de styrène, en présence d'amorceurs portant des atomes d'hydrogène actifs tels que des polyols, des polyamines, des alcanolamines.

A titre illustratif peuvent être cités, comme amorceurs, l'éthylèneglycol, le diéthylèneglycol, le glycérol, l'hexatriol-1,2,6, le triméthyloléthane, le triméthylolpropane, le sucrose, l'éthylènediamine, la diéthylènetriamine, l'éthanolamine, l'isopropanolamine.

La forte teneur en radicaux hydroxyles primaires des polyetherpolyols est obtenue conjointement par le choix des amorceurs (ayant une fonctionnalité moyenne d'au moins 2,1) et le bloquage des chaines polyalcoylènes par de l'oxyde d'éthylène.

Les polyisocyanates organiques utilisés industriellement peuvent être de nature aliphatique, cycloaliphatique, arylaliphatique, aromatique ou hétérocyclique; généralement sont employés les toluylènediisocyanates (mélanges d'isomères 2—4 et 2—6 distribués dans le rapport molaire 80—20 ou 65—35), les éthylène, propylène et hexaméthylènediisocyanates, le diisocyanato-4,4' diphénylméthane, le diisocyanato-1,5 naphtalène, le diisocyanato-1,3 cyclohexane, les polyisocyanates polymères tels que les polyméthylènepolyphénylisocyanates décrits par exemple dans le brevet américain 2 683 730 ou les brevets anglais 848 671 et 874 430, les polyisocyanates modifiés portant des groupes carbodiimides, uréthannes, isocyanurates, biurets, allophanates ou urées acylées, décrits respectivement dans les brevets américains 3 152 162, 3 394 164, 3 001 973, 3 124 605, le brevet anglais 994 890 et le brevet allemand 1 230 778.

La quantité de polyisocyanates utilisée doit être suffisante pour fournir au moins de 0,8 à 1,5 radical —NCO, de préférence de 0,9 à 1,15, par hydrogène actif, présent dans les compositions moussantes, apporté principalement par les polyétherpolyols et l'eau.

Les agents d'expansion sont choisis parmi l'eau et/ou des substances organiques volatiles ou se décomposant à une température supérieure à la température ambiante. De préférence sont utilisés l'eau et les alcanes halogénés volatils tels le monofluorotrichlorométhane, le difluorodichlorométhane, le trichloro-1,1,2 trifluoro-1,2,2 éthane.

L'eau est habituellement employée à raison de 1 à 6 parties, et les alcanes halogénés volatils à raison de 2 à 20 parties, pour 100 parties de polyétherpolyols.

Les catalyseurs sont des mono et polyamines organiques, de préférence tertiaires telles la triéthylamine, le diaza-1,4 bicyclo-2,2,2 octane (ou triéthylènediamine), la N-N-N'-N' tétraméthyléthylènediamine, la N-éthylmorpholine, la N-N' diméthylpiperazine, la N-N diméthylcyclohexylamine, le bis(diméthylamino-1,3) butane, l'oxyde de bis(diméthylamino-2 éthyle).

Des catalyseurs organométalliques à base de sels et oxydes d'étain peuvent être également utilisés tels l'éthyl-2 hexanoate stanneux, le dilaurate de dibutylétain, l'oxyde de dibutylétain.

Des réticulants peuvent être introduits dans le dessein d'améliorer les propriétés mécaniques des

mousses; ils possèdent des hydrogènes actifs. A titre illustratif peuvent être cites, comme réticulants,

— des polyols tels que le glycérol, le butanediol-1,4, le butanediol-1,3 le triméthylolpropane, le triol de formule:

$$CH_3CH_2C(CH_2OCH_2CH_2OH)_3,$$

les condensats (à fort indice d'hydroxyle) d'oxydes d'alcoylènes sur des polyols.

— des polyamines telles que le dichloro-3,3' diamino-4,4' diphénylméthane, la diméthylamino-propylamine, la N,N' bis(amino-2 propyl) piperazine.

— des alcanolamines telles que les mono, di et triéthanolamines, les mono, di et triiso-propanolamines.

D'autres ingrédients peuvent être introduits comme des retardateurs de réaction, des régulateurs de structure cellulaire, des pigments, des ignifugeants, des plastifiants, des fongicides et bactéricides.

Les compositions moussantes sont préparées par simple mélange (dans un ordre quelconque) des divers ingrédients précédemment cités, les polyisocyanates étant de préférence ajoutés en dernier. Pour éviter, au niveau de la fabrication industrielle des mousses, de manipuler dans une période de temps assez réduite et sur une surface restreinte, tous ces ingrédients, il est avantageux de former des prémélanges stables et homogènes renfermant au moins 2 ingrédients; par exemple ces prémélanges peuvent être constitués de:

— tous les ingrédients sauf les polyisocyanates.

— seulement les polyétherpolyols et les stabilisants organosiliciques.

— les polyétherpolyols, les stabilisants organosiliciques, l'eau et/ou les agents d'expansion.

— les polyisocyanates et les stabilisants organosiliciques.

Comme la réaction est fortement exothermique les mousses de polyuréthanne sont fabriquées sans appliquer une source extérieure de chaleur. La réaction peut cependant être accélérée en préchauffant les moules dans lesquels a lieu l'expansion des mousses. Les moules peuvent être fermés ou ouverts; ils sont fermés pour la préparation de produits moulés devant posséder une forme et un aspect de surface bien déterminés, ils sont ouverts pour la préparation de blocs volumineux ou ayant une surface étendue.

Les mousses préparées selon le procédé conforme à la présente invention possèdent une structure cellulaire fine et régulière et un ensemble de caractéristiques physiques élevées, en outre elles s'affaissent peu ou même pas du tout après le démoulage. Elles sont utilisables en particulier dans la matelasserie, l'emeublement, les revêtements muraux, l'emballage, l'industrie automobile.

PREPARATION DU DIPENTAERYTHRITOL HEXATRIMETHYLSILYLE

Dans un réacteur de 2 litres équipé d'une gaine thermométrique, d'une agitation, d'une ampoule de coulée et d'un réfrigérant surmonté d'un analyseur, sont chargés 200 g de toluène, 254 g (1 mole pour une pureté de 100%) de dipentaérythritol de formule

$$(HOCH_2)_3C—CH_2OCH_2—C(CH_2OH)_3$$

et 239 g (2,2 moles) de triméthylchlorosilane. Le dipentaérythritol utilisé est un produit commercial ayant au moins 38% en poids de groupes hydroxyles, de point de fusion 212—217°C.

Dans l'ampoule de coulée sont chargés 354 g (2,2 moles) d'hexaméthyldisilazane.

Le contenu agité du ballon est d'abord porté à 50°C. A cette température le chauffage est enlevé et l'hexaméthyldisilazane est introduit dans le ballon à un débit suffisant pour assurer, du fait de l'exothermicité de la réaction de silylation, une température du contenu du ballon située dans l'intervalle 55—65°C.

L'introduction de l'hexaméthyldisilazane dure environ 2 h; lorsqu'elle est terminée le contenu du ballon est chauffé au reflux pendant 1 h puis traité, après refroidissement vers 25°C, une première fois par 375 g d'eau et une deuxième fois par 200 g d'eau. Ce traitement élimine le chlorure d'ammonium formé.

La solution toluénique restante est chauffée progressivement vers 100°C, sous une pression réduite de 2500 Pa; au cours de ce chauffage sont principalement éliminés le toluène et l'hexaméthyldisiloxane lequel provient de l'hydrolyse de l'excès de triméthylchlorosilane et d'hexaméthyldisilazane engagé dans la réaction.

175 g de toluène sont ensuite ajoutés au résidu de dévolatilisation et l'ensemble est de nouveau soumis à un chauffage progressif vers 100°C sous une pression de 2500 Pa.

Le residu obtenu est filtré à chaud vers 60°C.

Le filtrat (648 g) cristallise par abandon à la température ambiante, il fond vers 40—42°C et renferme environ 0,1% de groupes hydroxyles (le dipentaérythritol pur en renferme 40%).

L'analyse chromatographique en phase gazeuse, associée à l'analyse chromatographique d'exclusion-diffusion sur gel de silice, indique que ce filtrat est constitué sensiblement de:

— 92% du dipentaérythritol hexatriméthylsilylé de formule

$$\{(CH_3)_3SiOCH_2\}_3C-CH_2OCH_2-C\{CH_2OSi(CH_3)_3\}_3$$

— 1,5% du monopentaérythritol tétratriméthylsilylé de formule

$$\{(CH_3)_3SiOCH_2\}_4C$$

— 4,5% du tripentaérythritol octatriméthylsilylé de formule

$$\{(CH_3)_3SiOCH_2\}_2C[CH_2O-CH_2C-\{CH_2OSi(CH_3)_3\}_3]_2$$

— 2% de produits non identifiés.

PREPARATION DU TRIPENTAERYTHRITOL OCTATRIMETHYL SILYLE

Le mode opératoire est analogue à celui mis en oeuvre pour la préparation du dipentaérythritol hexatriméthylsilylé

Dans le réacteur de 2 litres utilisé précedemment sont chargés 200 g de toluène, 186 g (0,5 mole pour une pureté de 100%) de tripentaérythritol de formule

$$(HOCH_2)_2C\{CH_2OCH_2C(CH_2OH)_3\}_2$$

et 159 g (1,46 mole) de triméthylchlorosilane. Le tripentaérythritol utilisé est un produit commercial ayant au moins 35% de groupes hydroxyles, de point de fusion 238—240°C.

Dans l'ampoule de coulée sont chargés 236 g (1,46 mole) d'hexaméthyldisilazane.

Le contenu du ballon est porté vers 60°C; à cette température l'hexaméthyldisilazane est introduit dans le ballon à un débit suffisant pour maintenir la température du contenu du ballon vers 60—65°C. L'introduction de l'hexamethyldisilazane dure environ 1h10.

Le contenu du ballon est ensuite chauffé au reflux pendant 1 h; il est traité, après refroidissement vers 25°C, une première fois par 250 g d'eau et une deuxième fois par 150 g d'eau.

La solution toluénique restante est dévolatilisée par chauffage progressif vers 100°C sous une pression de 2500 Pa. Au résidu de dévolatilisation sont ajoutés 150 g de toluène et l'ensemble est de nouveau soumis à un chauffage vers 100°C sous une pression réduite de 2500 Pa.

Le résidu obtenu est filtré à chaud vers 50°C.

Le filtrat (385 g) reste liquide par abandon à la température ambiante, sa viscosité est de l'ordre de 580 mPa.s à 25°C; il renferme environ 0,07% de groupes hydroxyles résiduaires (le tripentaérythritol pur en renferme 36%). L'analyse chromatographique en phase gazeuse, associée à l'analyse chromatographique d'exclusion-diffusion sur gel de silice, indique que ce filtrat est constitué de:

— 88% du tripentaérythritol octatriméthylsilylé de formule

$$\{(CH_3)_3SiOCH_2\}_2C[CH_2OCH_2C\{CH_2OSi(CH_3)_3\}_3]_2$$

— 1,5% du dipentaérythritol hexatriméthylsilylé de formule

$$\{(CH_3)_3SiOCH_2\}_3C-CH_2OCH_2-C\{CH_2OSi(CH_3)_3\}_3$$

— 7% du tétrapentaérythritol décatriméthylsilylé de formule

$$(CH_3)_3SiOCH_2C[CH_2OCH_2-C\{CH_2OSi(CH_3)_3\}_3]_3$$

— 0,5% du pentapentaérythritol dodécatriméthylsilylé de formule

$$C[CH_2OCH_2-C\{CH_2OSi(CH_3)_3\}_3]_4$$

— 3% de produits non identifiés.

Exemple 1

Dans un réacteur de 2 litres, équipé d'une agitation, sont successivement introduits, après mise en marche de l'agitation les ingrédients suivants:

— 1000 g de polyéthertriol de poids moléculaire 5000 renfermant environ 75% en nombre de groupes hydroxyles primaires, d'indice d'hydroxyle 35.

— 30 g d'eau.

— 100 g de trichlorofluorométhane.

— 2,7 g du diaza-1,4 bicyclo-2,2,2 octane.

— 4 g de l'étheroxyde aminé de formule

$$\{(CH_3)_2NCH_2CH_2\}_2O$$

Après la fin de l'addition de l'étheroxyde aminé l'agitation du mélange des ingrédients est poursuivie pendant 2 minutes.

147,8 g du mélange stable et homogène, obtenu ci-dessus, (renfermant 130 g du polyéthertriol) sont introduits dans un réacteur de 300 cm3 équipé d'une agitation à vitesse variable. Au contenu de ce réacteur est d'abord ajouté 0,020 g du dipentaérythritol hexatriméthylsilylé (fondant vers 40—42°C, ayant 0,1% de groupes hydroxyles) préparé à l'exemple 1; cette addition a lieu sous la forme d'une dilution à 10% du dipentaérythritol hexatriméthylsilylé dans l'octaméthylcyclotétrasiloxane, soit 0,20 g de la dilution; l'ensemble est agité pendant 15 secondes à 1000 tours/minute.

Ensuite sont ajoutés 58,1 g d'un mélange constitué de 34,9 g du diisocyanato-4,4' diphénylméthane et 23,2 g de toluylènediisocyanate 80—20; l'ensemble est agité pendant 6 secondes à 1500 t/mn. Il résulte de cette succession d'opérations la formation d'une composition moussante; celle-ci est aussitôt versée dans un moule en aluminium de dimensions 200 x 200 x 100 mm, chauffé vers 40°C; le moule est ensuite fermé; il est ouvert au bout d'une période de 10 mn et le bloc de mousse de polyuréthanne qu'il contient est enlevé puis découpé en 2 parties sensiblement égales, de dimensions 200 x 100 x 100 mm. On constate, par l'examen visuel de la zone découpée de chaque partie, que les cellules de la mousse sont fines et régulières; en outre il n'y a pas de cellules grossières en forme de "nids d'abeilles" à la base du bloc de mousse.

L'une des 2 parties du bloc de mousse est laissée telle quelle et l'autre partie est calandrée manuellement.

Le volume de chaque partie du bloc est mesuré au bout de 5 heures d'abandon à la température ambiante après le démoulage, et, de ces mesures est déduit le retrait (exprimé en volume %) de la partie non calandrée vis-à-vis de la partie calandrée.

Des éprouvettes sont ensuite découpées dans le coeur de la partie calandrée au bout d'une période de 24 heures d'abandon à la température ambiante après le démoulage (d'autres blocs de mousse sont préparés selon le mode opératoire défini ci-avant et à partir des mêmes ingrédients afin d'avoir suffisamment d'échantillons pour établir les caractéristiques de la mousse).

Ces éprouvettes ont pour dimensions 50 x 50 x 25 mm et 100 x 100 x 50 mm.

Celles de dimensions 50 x 50 x 25 mm servent à la mesure de la densité et de la porosité. La porosité représente le nombre de litres d'air traversant en 1 mn les éprouvettes placées perpendiculairement, selon leur grande section (50 x 50 mm$^2$), à un flux d'air soumis à une pression de 1,0012 x $10^5$ Pa.

Celles de dimensions 100 x 100 x 50 mm servent à la mesure du rebond selon la norme ASTM D 1564 T. La valeur du rebond, exprimée en cm, définit la distance entre le point d'impact d'une bille d'acier tombant sur l'éprouvette (laquelle est inclinée de 45° par rapport à l'axe de la chute de la bille) et son point de chute après rebondissement.

D'autre part, une mousse témoin est fabriquée en suivant le mode opératoire ci-dessus mettant en oeuvre les mêmes ingrédients mais sans l'introduction de 0,020 g du dipentaérythritol hexatriméthylsilylé. On constate, par l'examen visuel de la zone découpée des 2 parties du bloc de mousse témoin, que la structure cellulaire est moins fine que celle de la mousse au dipentaérythritol hexatriméthylsilylé; en outre de grosses cellules en forme de "nids d'abeilles" sont visibles à la base du bloc de cette mousse témoin.

Les parties contenant de grosses cellules sont inutilisables industriellement. Aussi doit-on les éliminer, ce qui entraine des pertes de matière.

Sur la partie calandrée de cette mousse témoin (choisie dans le coeur de la mousse, afin de ne pas utiliser la partie contenant les grosses cellules) sont également mesurées la densité, la porosité et le rebond et sur la partie non calandrée est évalué le retrait en volume % par rapport à la partie calandrée, Les résultats concernant les 2 types de mousse sont rassemblés dans le tableau ci-dessous:

| | densité en g/l | porosité en l/min | rebond en cm | retrait en volume % |
|---|---|---|---|---|
| Mousse au dipentaérythritol hexatriméthylsilylé | 33,1 | 145 | 49,5 | 11% |
| Mousse témoin | 34,1 | 155 | 49 | 8% |

On constate peu de différence entre les caractéristiques physiques de la mousse fabriquée avec le dipentaérythritol hexatriméthylsilylé et celles de la mousse témoin; il n'y a donc pas de dégradations des caractéristiques physiques provoquées par la présence du dipentaérythritol hexatriméthylsilylé.

A titre comparatif des mousses sont fabriquées selon le mode opératoire mis en oeuvre, ci-avant,

pour la préparation de la mousse au dipentaérythritol hexatriméthylsilylé mais cet additif est remplacé par le pentaérythritol tétraméthylsilylé de formule

$$[(CH_3)_3SiOCH_2]_4C$$

dont l'emploi, pour la préparation de mousses de polyuréthanne, est décrit dans le brevet français 2 288 754. Ce dérivé tétraméthylsilylé est introduit en une quantité suffisante pour obtenir une mousse ayant une structure fine et régulière sans alvéoles grossières.

On constate alors qu'il faut utiliser 0,2 g de ce dérivé au lieu de 0,02 g du dipentaérythritol hexatriméthylsilylé, soit 10 fois plus.

## Exemple 2

Dans le réacteur utilisé à l'exemple 1 sont successivement introduits:— 1000 g du polyéthertriol de l'exemple 1

— 30 g d'eau
— 2 g du diaza-1,4 bicyclo-2,2,2 octane
— 4 g de diméthylaminopropylamine
— 70 g d'un condensat oxyde de propylène-saccharose
— 15 g de glycérine
— 14 g de diéthanolamine.

Après la fin de l'addition de la diéthanolamine, le mélange des divers ingrédients est agité pendant 5 min.

170,2 du mélange, stable et homogène, obtenu ci-dessus (renfermant 150 g du polyéthertriol) sont introduits dans un réacteur de 350 cm 3 équipé d'une agitation à vitesse variable. Au contenu de ce réacteur est tout d'abord ajouté 0,015 g du tripentaérythritol octatriméthylsilylé de viscosité 580 mPa.s à 25°C (ayant 0,07% de groupes hydroxyles) préparé à l'exemple 2; cette addition a lieu sous la forme d'une dilution à 10% du tripentaérythritol octatriméthylsilylé dans le tétraméthyltétravinylcyclo-tétrasiloxane, soit 0,15 g de la dilution; l'ensemble est agité pendant 15 secondes à 1000 t/min. Ensuite sont ajoutés 78 g d'un mélange constitué de 19,5 g du diisocyanato-4,4′ diphénylméthane et 58,5 g de toluylènediisocyanates 80—20; l'ensemble est agité pendant 6 secondes à 1500 t/mn.

Il résulte de cette succession d'opérations la formation d'une composition moussante qui est aussitôt versée dans un moule cylindrique non fermé, en polyéthylène, d'une contenance de 6 litres. Cette composition se transforme librement en un bloc de mousse; celui-ci est démoulé 10 min après l'introduction de la composition puis découpé en 2 parties sensiblement égales.

La zone découpée de chaque partie montre une mousse ayant une structure cellulaire fine et régulière et dépourvue d'alvéoles grossières en forme de "nids d'abeilles" habituellement situées à la base des blocs. L'une des 2 parties est laissée telle quelle et l'autre est calandrée manuellement.

Les mesures des caractéristiques physiques de la mousse sont effectuées selon le processus figurant à l'exemple 1; ces mesures établissent le retrait de la partie non calandrée vis-à-vis de la partie calandrée ainsi que la densité, la porosité et le rebond de la partie calandrée.

Une mousse témoin est fabriquée en suivant le mode opératoire mis en oeuvre, ci-avant, pour la préparation de la mousse au tripentaérythritol octatriméthylsilylé mais sans la présence de cet additif.

On constate à l'opposé de la mousse au tripentaérythritol octatriméthylsilylé que la mousse témoin a une structure cellulaire irrégulière; en outre des alvéoles en forme de "nids d'abeilles" sont visibles à la base des blocs de cette mousse.

Les mesures identiques à celles citées précédemment sont effectuées sur cette mousse témoin; les résultats concernant les 2 mousses sont rassemblés dans le tableau ci-après:

| | densité en g/l | porosité en l/min | rebond en cm | retrait en volume % |
|---|---|---|---|---|
| Mousse au tripentaérythritol octatriméthylsilylé | 33 | 166 | 49 | 0% |
| Mousse témoin | 34 | 172 | 49,5 | 0% |

Ces résultats indiquent que les 2 mousses ont des caractéristiques physiques très semblables; ainsi l'incorporation du tripentaérythritol octatriméthylsilylé ne dégrade pas les propriétés des mousses souples de polyuréthanne.

Exemple 3

Dans le réacteur utilisé à l'exemple 1 sont successivement introduits:

— 1000 g d'un polyéthertriol de poids moléculaire 5500 renfermant environ 65% en nombre de groupes hydroxyles primaires, d'indice d'hydroxyle 28

— 30 g d'eau

— g du diaza-1,4 bicyclo-2,2,2 octane

— 4 g de triéthylamine

— 6 g de la N-N' bis(amino-2 propyl)piperazine.

Après la fin de l'addition de la N-N' bis(amino-2 propyl) piperazine, le mélange des divers ingrédients est agité pendant 3 min.

135,3 g du mélange, stable et homogène, obtenu ci-dessus (renfermant 130 g du polyéthertriol) sont introduits dans un réacteur de 300 cm 3 équipé d'une agitation à vitesse variable. Au contenu de ce réacteur est tout d'abord ajouté 0,040 g du dipentaérythritol hexatriméthylsilylé (fondant vers 40—42°C et ayant 0,1% de groupes hydroxyles) cette addition a lieu sous la forme d'une dilution à 10% du dipentaérythritol hexatriméthylsilylé dans l'octaméthylcyclotétrasiloxane, soit 0,4 g de la dilution; l'ensemble est agité pendant 15 secondes à 1000 t/mn. Ensuite sont ajoutés 53,3 g de toluylènediisocyanates 80—20 modifiés par réaction avec du tripropylèneglycol; l'ensemble est agité pendant 5 secondes à 1500 t/min.

Il résulte de cette succession d'opérations la formation d'une composition moussante qui est aussitôt versée dans un moule en aluminium de dimensions 200 x 200 x 100 mm.

Le moule est fermé; il est ensuite ouvert au bout d'une période de 10 mn et le bloc de mousse de polyuréthanne qu'il contient est enlevé puis découpé en 2 parties égales de dimensions 200 x 100 x 100 mm.

La zone découpée de chaque partie montre une mousse ayant une structure fine et régulière dépourvue d'alvéoles grossières à la base du bloc.

L'une des 2 parties est laissée telle quelle et l'autre est calandrée manuellement. Les mesures des caractéristiques physiques de la mousse (densité, porosité, rebond, retrait) sont mesurées selon le processus figurant à l'exemple 1.

Une mousse témoin est fabriquée en suivant le mode opératoire mis en oeuvre, ci-avant, pour la préparation de la mousse au dipentaérythritol hexatriméthylsilylé mais sans la présence de cet additif; ici encore, comme dans les exemples 1 et 2, la mousse témoin se différencie de la mousse renfermant l'additif au polypentaérythritol triméthylsilylé par une structure plus grossière, moins régulière, qui éclate à la base des blocs pour constituer des alvéoles en forme de "nids d'abeilles".

Les mesures des caractéristiques physiques sont ensuite effectuées sur cette mousse témoin. Les résultats concernant les 2 mousses sont rassemblés dans le tableau ci-après

| | densité en g/l | porosité en l/min | rebond en cm | retrait en volume % |
|---|---|---|---|---|
| Mousse au dipentaérythritol hexatriméthylsilylé | 33 | 155 | 50 | 0 |
| Mousse témoin | 35 | 163 | 48,5 | 0 |

Ces résultats indiquent que les 2 mousses ont des caractéristiques physiques presque identiques; donc, le dipentaérythritol hexatriméthylsilylé ne dégrade pas les mousses même lorsqu'il est introduit à une dose deux fois plus élevée (0,04 g pour 130 g du polyéthertriol) que celle utilisée àl'exemple 3 (0,02 g pour 130 g du polyéthertriol).

**Revendications**

1. Procédé de fabrication de mousses souples de polyurethanne dites "à froid" dans lequel on coule dans des moules, à l'aire ambiant, des compositions moussantes obtenues par mélange principalement de polyétherpolyols ayant une masse moléculaire comprise entre 750 et 50 000, contenant au moins 2,1 radicaux hydroxyles par mole (dont au moins 35% sont des radicaux hydroxyles primaires), de polyisocyanates, d'agent d'expansion, de catalyseurs, et de stabilisants à base de composés organosiliciques, puis on attend la formation des mousses et les démoule, caractérisé en ce que l'on utilise comme stabilisants, à raison de 0,001 à 1% en poids par rapport aux polyétherpolyols, des polypentaérythritols triorganosilylés de formule générale:

$$(R_3SiOCH_2)_{4-a}C\{CH_2OCH_2C(CH_2OSiR_3)_3\}_a$$

dans laquelle les symboles R, identiques ou différents, représentent des radicaux méthyles, éthyles, vinyles, au moins un radical R par groupe $—SiR_3$ est un radical méthyle, le symbole a représente 1,2,3 ou 4.

2. Procédé selon la revendication 1 caractérisé en ce que les polypentaérythritols triorganosilylés sont choisis parmi ceux de formules:

$$\{(CH_3)_3SiOCH_2\}_3CCH_2OCH_2C\{CH_2OSi(CH_3)_3\}_3$$

$$\{(CH_3)_3SiOCH_2\}_2C[CH_2OCH_2C\{CH_2OSi(CH_3)_3\}_3]_2$$

$$(CH_3)_3SiOCH_2C[CH_2OCH_2C\{CH_2OSi(CH_3)_3\}_3]_3$$

$$C[CH_2OCH_2C\{CH_2OSi(CH_3)_3\}_3]_4$$

**Patentansprüche**

1. Verfahren zur Herstellung von flexiblen Polyurethanschäumen, sogenannten "kaltgeschäumten", wobei man in Formen bei Umgebungsluft schäumende Zusammensetzungen gießt, welche erhalten sind durch Vermischen hauptsächlich von Polyätherpolyolen mit einer Molekularmasse zwischen 750 und 50 000, die wenigstens 2,1 Hydroxylreste pro Mol enthalten (wovon mindestens 35% primäre Hydroxylreste sind), von Polyisocyanaten, Treibmittel, Katalysatoren und Stabilisatoren auf Basis von Organosiliciumverbindungen, dann die Bildung der Schäume abwartet und sie entformt, dadurch gekennzeichnet, daß man als Stabilisatoren in einer Menge von 0,001 bis 1 Gew.-%, bezogen auf die Polyätherpolyole, Triorganosilylpolypentaerythrite der allgemeinen Formel

$$(R_3SiOCH_2)_{4-a}C\{CH_2OCH_2C(CH_2OSiR_3)_3\}_a$$

verwendet, worin die Symbole R, welche identisch oder voneinander verschieden sind, Methyl-, Äthyl-, Vinylreste bedeuten, wobei wenigstens ein Rest R pro Gruppe $—SiR_3$ ein Methylrest ist, und das Symbol a bedeutet 1, 2, 3 oder 4.

2. Verfahren gemäß Anspruch 1, dadurch gekennzeichnet, daß die Triorganosilylpolypentaerythrite ausgewählt sind aus denjenigen der Formeln:

$$\{(CH_3)_3SiOCH_2\}_3CCH_2OCH_2C\{CH_2OSi(CH_3)_3\}_3$$

$$\{(CH_3)_3SiOCH_2\}_2C[CH_2OCH_2C\{CH_2OSi(CH_3)_3\}_3]_2$$

$$(CH_3)_3SiOCH_2C[CH_2OCH_2C\{CH_2OSi(CH_3)_3\}_3]_3$$

$$C[CH_2OCH_2C\{CH_2OSi(CH_3)_3\}_3]_4$$

**Claims**

1. A process for the manufacture of so-called "cold-cast" flexible polyurethane foams in which foaming compositions, obtained by mixing, principally, polyetherpolyols having a molecular weight of between 750 and 50,000 and containing at least 2.1 hydroxyl radical per mol (of which radicals at least 35% are primary hydroxyl radicals), polyisocyanates, blowing agent, catalysts and stabilisers based on organosilicon compounds, are poured into moulds, exposed to the atmosphere, and after the foam has had time to form it is removed from the mould, characterised in that the stabilisers used, in amounts of 0.001 to 1% by weight relative to the polyether-polyols, are triorganosilylated polypentaerythritols of the general formula:

$$(R_3SiOCH_2)_{4-a}C\{CH_2OCH_2C(CH_2OSiR_3)_3\}_a$$

in which the symbols R, which are identical or different, represent methyl, ethyl or vinyl radicals, at least one radical R per $—SiR_3$ group being a methyl radical, and the symbol a represents 1, 2, 3 or 4.

2. A process according to Claim 1, characterised in that the triorganosilylated polypentaerythritols are chosen from amongst those of the formulae:

$$\{(CH_3)_3SiOCH_2\}_3CCH_2OCH_2C\{CH_2OSi(CH_3)_3\}_3$$

$$\{(CH_3)_3SiOCH_2\}_2C[CH_2OCH_2C\{CH_2OSi(CH_3)_3\}_3]_2$$

$$(CH_3)_3SiOCH_2C[CH_2OCH_2C\{CH_2OSi(CH_3)_3\}_3]_3 \quad \text{and}$$

$$C[CH_2OCH_2C\{CH_2OSi(CH_3)_3\}_3]_4$$